# EUROPÄISCHE PATENTSCHRIFT

(11) **EP 1 875 588 B1**
(45) Veröffentlichungstag und Bekanntmachung des Hinweises auf die Patenterteilung: **24.08.2011**
(21) Anmeldenummer: 06705994.9
(22) Anmeldetag: 20.02.2006
(51) Int. Cl.: H02K 15/095

(54) **VORRICHTUNG ZUM AUFBRINGEN EINER WICKLUNG**
DEVICE FOR APPLYING A WINDING
DISPOSITIF POUR PLACER UN ENROULEMENT

(30) Priorität: 21.04.2005 DE 102005018661
(43) Veröffentlichungstag der Anmeldung: 09.01.2008
(73) Patentinhaber: Aumann GMBH, 32339 Espelkamp (DE)
(72) Erfinder: HAGEDORN, Jürgen, 32312 Lübbecke (DE)
(74) Vertreter: Scheffler, Jörg
(86) Internationale Anmeldenummer: PCT/DE2006/000311
(87) Internationale Veröffentlichungsnummer: WO 2006/111116

(56) Entgegenhaltungen:
- US-A- 4 158 314
- US-A- 5 560 554
- PATENT ABSTRACTS OF JAPAN Bd. 010, Nr. 077 (M-464), 26. März 1986 (1986-03-26) & JP 60 218270 A (KAMEI MACHINE PROJECT KK; others: 01), 31. Oktober 1985 (1985-10-31)

## Beschreibung

Die Erfindung betrifft eine Vorrichtung zum Aufbringen eines Wickeldrahtes auf ein zu bewickelndes Bauteil, insbesondere auf einen Anker eines Elektromotors, mit einer den Wickeldraht führenden Wickelnadel, welche relativ zu dem zu bewickelnden Bauteil mittels einer Kurbelstange reversierend antreibbar ist, die mit einer durch einen Antrieb rotationsbeweglichen Antriebswelle verbunden ist, wobei die Hubhöhe mittels einer eine drehbewegliche Verstellwelle aufweisenden Hubverstelleinheit einstellbar ist, wobei die Verstellwelle gegenüber der Antriebswelle relativ drehbeweglich ist.

Eine solche Vorrichtung zum Aufbringen eines Wickeldrahtes auf das zu bewickelnde Bauteil wird in der Praxis seit langem eingesetzt und zählt dadurch zum Stand der Technik. An einem dem Antrieb abgewandeten Ende der Antriebswelle ist hierzu an die Kurbelstange ein exzentrisch verstellbarer Hubzapfen angeflanscht, welcher dadurch eine Hubbewegung mit einstellbarer Hubhöhe ausführt. Zur Einstellung der Hubhöhe dient dabei eine Hubverstelleinheit, durch welche der Hubzapfen in unterschiedlichen radialen Abständen zur Mittelachse der Antriebswelle festgelegt werden kann.

Um im Gegensatz zu einer manuellen Verstellung durch einen Bediener eine mittels einer Steuereinheit automatisierte Verstellung der Hubhöhe entsprechend dem auf den jeweiligen Anforderungen des zu bewickelnden Bauteils basierenden Fertigungsprogramm erreichen zu können, sind weiterhin auch Vorrichtungen bekannt, deren Hubverstelleinheit einen Antrieb, insbesondere Servomotor, aufweist, durch den die Exzentrizität des Hubzapfens und damit die Hubhöhe einstellbar ist. Die Hubhöhenverstellung kann dabei ohne einen manuellen Eingriff und auch während des Bearbeitungsprozesses erfolgen.

Als nachteilig erweist es sich bei den bekannten Vorrichtungen jedoch in der Praxis, dass der Servomotor die rotierende Masse vergrößert und damit zu einer unerwünschten erhöhten Massenträgheit sowie zu einer Unwucht führt, die sich nachteilig auf die Dynamik des Gesamtsystems und damit auf das Prozessergebnis auswirkt.

Weiterhin sind zur elektrischen Kontaktierung des Servomotors Schleifkontakte erforderlich, die einem unerwünschten Verschleiß unterliegen und dadurch eine regelmäßige Wartung erfordern.

Eine demgegenüber abgewandelte Wickelvorrichtung für Statoren oder Anker von Elektromotoren als zu bewickelnde Bauteile ist aus der DE 37 09 687 C 2 bekannt. Bei dieser Wickelvorrichtung ist eine Wickelnadel in vertikaler Richtung bewegbar, und die an ihrem oberen Ende wenigstens eine Wickelnadel trägt. Die Wickelnadel wird in vertikaler Richtung mit Hilfe eines Antriebs angetrieben, der eine Spindel-Mutter-Einrichtung enthält. Auf diese Weise kann die Hubbewegung sowie die Hubhöhe direkt gesteuert eingeleitet werden. Diese Ausführung hat sich jedoch in der Praxis bereits als vergleichsweise aufwendig und aufgrund der begrenzten Hubgeschwindigkeit als nachteilig erwiesen.

Die DE 197 48 241 A1 betrifft ferner eine Vorrichtung zum Herstellen von Drahtspulen auf in konvexen Ebenen angeordneten Wickelkörpern. Hierzu werden die Drahtspulen auf den Wickelkörpern, insbesondere Ankern von Gleichstrommaschinen oder Statoren von Nabenmotoren, dadurch hergestellt, dass mittels Windarm Drahtwicklungen geformt und anschließend auf den Wickelkörper aufgeschoben werden. Zu diesem Zweck werden mit Hilfe des Windarms zunächst auf einer Wickelschablone einzelne Drahtwicklungen hergestellt.

Eine gattungsgemäße Vorrichtung ist auch aus der US 5,560,554 A bekannt. Um den Hub der Kurbelstange zu ändem, wird ein Einstellkopf radial in die entsprechende Fassung eingeschoben. Hierzu wird die Antriebsachse in einer fluchtenden Winkelstellung gegenüber dem Einstellkopf fixiert. Mittels eines Servomotors kann dann der Hubzapfen justiert werden.

Der Erfindung liegt die Aufgabe zugrunde, eine Möglichkeit zu schaffen, eine einfache Verstellbarkeit der Hubhöhe zu erreichen. Dabei sollen insbesondere die rotierenden Massen reduziert werden.

Diese Aufgabe wird erfindungsgemäß mit einer Vorrichtung gemäß den Merkmalen des Anspruchs 1 gelöst. Die Unteransprüche betreffen besonders zweckmäßige Weiterbildungen der Erfindung.

Erfindungsgemäß ist also eine Vorrichtung vorgesehen, bei der die Verstellwelle zur Einstellung der Hubhöhe mittels einer Drehwinkeldifferenz gegenüber der Antriebswelle koaxial zu dieser angeordnet ist Die Erfindung geht dabei von der Überlegung aus, dass die Hubhöhe dann in einfacher Weise ohne zusätzliche Trägheitsmomente auch während des Fertigungsprozesses einstellbar ist, wenn hierzu eine zentrale Verstellwelle vorgesehen ist, die während des Fertigungsprozesses grundsätzlich synchron zu der Antriebswelle rotiert und die zur Erzielung einer radialen Verstellung eines die Kurbeistange anlenkenden Hubzapfens relativ zu der Antriebswelle drehbeweglich ist. Die Verstellwelle wirkt dabei auf die Hubverstelleinheit derart, dass die Drehbewegung in eine radiale Verlagerung des Hubzapfens umgesetzt wird. Die rotierende Masse kann dadurch ebenso wie der Herstetellungsaufwand wesentlich verringert werden.

Dabei erweist es sich als besonders praxisgerecht, wenn die Antriebswelle als eine Hohlwelle ausgeführt ist und die Verstellwelle in ihrem Inneren aufnimmt. Hierdurch erfolgt die Übertragung der Antriebsleistung mittels der hohlen Antriebswellen vollkommen unabhängig von der Betätigung der Hubverstelleinheit. Dabei kann im Wesentlichen auf vorhandene Konstruktionen und Antriebseinheiten zurückgegriffen und gegebenenfalls auch bereits vorhandene Vorrichtungen entsprechend nachgerüstet werden.

Die im Betrieb zur Festlegung der Hubhöhe erforderliche Synchronisation der Drehzahl ist dabei ein einfacher Weise durch eine drehfeste Verbindung, beispielsweise eine Sperrklinke oder gemäß einer weiteren vorteilhaften Abwandlung dadurch realisierbar, dass die Vorrichtung eine Kupplung zur drehfesten Verbindung der Antriebswelle mit der Verstellwelle aufweist, um dadurch eine einfache Synchronisation der Drehzahl zu erreichen. Beispielsweise kann die Hubhöhe dabei in einfacher Weise im Stillstand der Vorrichtung durch ein Lösen der Kupplung und eine anschließend manuelle Relativdrehung der Verstellwelle gegenüber der Antriebswelle eingeleitetet werden. Demgegenüber kann mittels der Kupplung auch ein Schlupf zwischen der Antriebswelle und der Verstellwelle, beispielsweise in Verbindung mit einer Bremse für die Verstellwelle, eingestellt werden, so dass ein separater Antrieb für die Verstellwelle nicht erforderlich ist.

Dabei ist es besonders Erfolg versprechend, wenn die Kupplung elektrisch betätigbar ist, um so eine weit reichende Automatisierung der Vorrichtung auf der Basis eines individuellen Steuerprogrammes erreichen zu können. Die Betätigung kann dabei sowohl während des Arbeitsprozesses als auch im Stillstand der Vorrichtung erfolgen.

Bei einer anderen Ausführung kann die Hubhöhenverstellung auch während des Arbeitsprozesses dadurch erreicht werden, dass die Kupplung gelöst und anschließend die Verstellwelle mit einer abweichenden Drehzahl angetrieben werden, bis die gewünschte Position des Hubzapfens erreicht ist, wenn gemäß einer weiteren vorteilhaften Abwandlung der Erfindung die Verstellwelle mittels eines Antriebes beweglich ist.

Insbesondere sind mittels des jeweiligen Antriebes einerseits in der Arbeitsposition die Antriebswelle und die Verstellwelle zumindest im Wesentlichen drehzahlsynchron und andererseits zur Einleitung der Hubhöhenverstellung mit einer kurzzeitigen Drehzahldifferenz antreibbar. Hierdurch kann beispielsweise auf eine Kupplung zu Synchronisation der Wellen verzichtet werden, indem diese mittels ihres jeweiligen Antriebes mit übereinstimmender Drehzahl angetrieben werden.

Demgegenüber wird eine andere besonders vorteilhafte Abwandlung der vorliegenden Erfindung dadurch erreicht, dass die beiden Wellen mittels desselben Antriebes antreibbar und durch ein zumindest zwei Schaltstufen aufweisendes Getriebe wahlweise oder zugleich antreibbar sind, um dadurch beide Welle mittels eines einzigen Antriebes in die gewünschte synchrone Rotation zu versetzen und dennoch in einer weiteren Schaltstufe des Getriebes eine Drehwinkeldifferenz einstellen zu können.

Mittels der Verstellwelle könnte eine Längenänderung der Kurbelstange eingestellt werden, um so die Hubhöhe zu variieren. Besonders zweckmäßig ist hingegen eine Ausgestaltung der vorliegenden Erfindung, bei der mittels der Hubverstelleinheit ein die Kurbelstange anlenkender Hubzapfen, in unterschiedlichen relativen Positionen gegenüber der Mittelachse der Antriebswelle festlegbar ist. Der Hubzapfen ist hierzu beispielsweise an einem Schlitten angeordnet und an einer mit der Antriebswelle drehfest verbundenen Kurbelscheibe radial verschiebbar. Weiterhin ist es auch möglich, den Hubzapfen an einem Planetenrad zu dessen Mittelachse exzentrisch anzuordnen, so dass ein Differenzdrehwinkel des Innenzahnrades gegenüber dem äußeren Zahnrad zu einer Hubhöhenverstellung führt. Ferner kann der Hubzapfen auch an einem Schwenkarm mittels eines an der Verstellwelle angeflanschten Nockens verstellbar angeordnet sein.

Besonders einfach ist eine Weiterbildung, bei der die Hubverstelleinheit eine mittels eines mit der Verstellwelle verbundenen Zahnrades stufenlos einstellbare Zahnstange aufweist, so dass eine einfache Berechnung des erforderlichen relativen Drehwinkels zur Realisierung eines vorbestimmten radialen Verstellweges der Zahnstange und damit des Schlittens möglich ist. Die Steuerung der Hubhöhe wird dadurch wesentlich vereinfacht.

Die hohle Antriebswelle könnte mittels eines Hohlwellenmotors rotationsbeweglich antreibbar sein. Besonders einfach ist hingegen eine Abwandlung der vorliegenden Erfindung, bei welcher die Vorrichtung ein Hohlwellengetriebe zur Übertragung der Antriebsleistung auf die hohle Antriebswelle aufweist. Hierdurch können an sich bekannte Antriebsmotoren eingesetzt werden, die mittels des Hohlwellehgetriebes die erforderliche Antriebsleistung auf die Antriebswelle übertragen. Ein Hohlwellenwinkelgetriebe ist hierzu ebenso geeignet wie ein einfaches Zahnradgetriebe mit einer parallelen Anordnung der Motorachse und der Antriebswelle.

Weiterhin erweist es sich als besonders zweckmäßig, wenn die Vorrichtung eine Steuereinheit aufweist und dass eine Verlagerung der Wickelnadel in Achsrichtung der Antriebswelle einhergehende neigungsbedingte Veränderung des Abstandes der Wickelnadel gegenüber der Antriebswellen-Mittelachse mittels der Steuereinheit durch eine Veränderung der Hubhöhe ausgeglichen wird, um so die Hubhöhe auch bei einer Verlagerung der Wickelnadel quer zur Hubrichtung konstant zu halten.

Die Erfindung lässt verschiedene Ausführungsformen zu. Zur weiteren Verdeutlichung ihres Grundprinzips ist eine davon in der Zeichnung dargestellt und wird nachfolgend beschrieben. Diese zeigt in
- Fig.1: eine Seitenansicht einer erfindungsgemäßen Vorrichtung;
- Fig.2: eine vergrößerte Vorderansicht einer Kurbelscheibe der in Figur 1 gezeigten Vorrichtung.

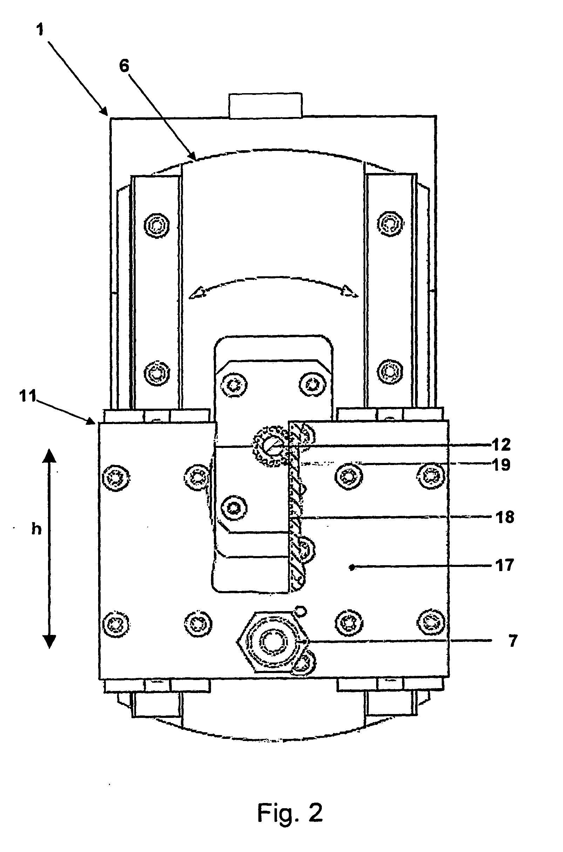

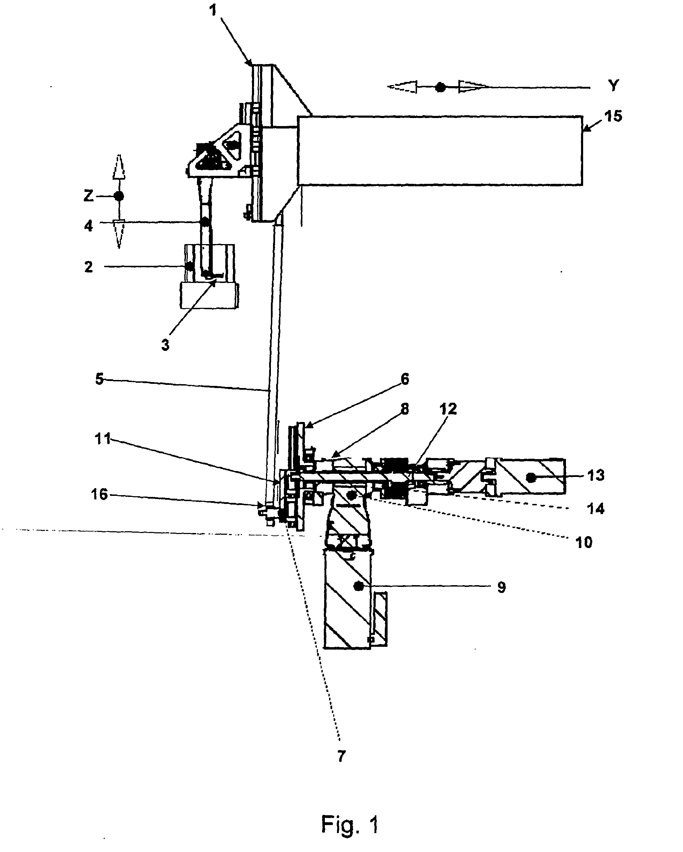

Figur 1 zeigt eine erfindungsgemäße Vorrichtung 1 zum Aufbringen eines nicht gezeigten Wickeldrahtes auf ein zu bewickelndes Bauteil 2 in eine Seitenansicht. Zum Bewickeln des Bauteils 2 hat die Vorrichtung 1 eine den Wickeldraht führende Wickelnadel 3, welche relativ zu dem zu bewickelnden Bauteil 2 in Richtung der Z-Achse reversierend hubbeweglich antreibbar ist. Hierzu wird ein die Wickelnadel 3 aufnehmender Nadelträger 4 mittels einer Kurbelstange 5 angetrieben, die mittels eines an einer rotationsbeweglichen Kurbelscheibe 6 exzentrisch angeordneten Hubzapfens 7 mit einer Antriebswelle 8 verbunden ist. Die Antriebswelle 8 ist als eine Hohlwelle ausgeführt, wobei die Antriebsleistung eines Antriebs 9 mittels eines Hohlwellenwinkelgetriebes 10 auf die Antriebswelle 8 übertragen wird. Zur Einstellung der gewünschten Hubhöhe der rotierenden Kurbelscheibe 6 dient eine Hubverstelleinheit 11, die mittels einer im Inneren der hohlen Antriebswelle 8 koaxial angeordnete Verstellwelle 12 betätigt werden kann. Die durch einen zweiten Antrieb 13 bewegliche zentrale Verstellwelle 12 rotiert während des Betriebes synchron zu der Antriebswelle 8, wobei eine relative Drehwinkeldifferenz der Verstellwelle 12 gegenüber de Antriebswelle 8 zu einer radialen Verstellung des die Kurbeistange 5 anlenkenden Hubzapfens 7 führt. Mittels der Hubverstelleinheit 11 wird dabei die relative Drehbewegung der Verstellwelle 12 gegenüber der Antriebswelle 8 in eine radiale Verlagerung des Hubzapfens 7 umgesetzt, wie dies in der Figur 2 näher dargestellt ist. Um die Hubhöhe bedarfsweise mit einem geringen Aufwand konstant halten zu können, ist die Vorrichtung 1 mit einer elektrisch betätigbaren Kupplung 14 zur drehfesten Verbindung der Antriebswelle 8 mit der Verstellwelle 12 ausgestattet, so dass im konstanten Betrieb der Antrieb 13 von der der Verstellwelle 12 getrennt werden kann. Der Nadelträger 4 mit der beweglichen Wickelnadel 3 ist an einem x-y-Koordinatentisch 15 angeordnet. Durch die Ankopplung der Kurbelstange 5 mittels Kugelgelenken 16 an dem Nadelträger 4 einerseits und der Hubverstelleinheit 11 andererseits kann der Nadelträger 4 in Richtung der Y-Achse verfahren werden, ohne dass hierzu zugleich eine Bewegung des Hubzapfens 7 in axialer Richtung der Antriebswelle 8 erforderlich ist. Vielmehr führt die Bewegung in Richtung der Y-Achse zu einer Schwenkbewegung der Kurbelstange 5 um den Hubzapfen 7, wobei jedoch eine unerwünschte Veränderung der Vertikalposition der Wickelnadel 3 in Richtung der Z-Achse dadurch vermieden wird, dass mittels einer nicht gezeigten Steuereinheit die Hubhöhe entsprechend verändert, insbesondere also vergrößert wird.

Ergänzend zeigt Figur 2 eine vergrößerte Vorderansicht der in Figur 1 gezeigten Kurbelscheibe 6 der Vorrichtung 1. Dargestellt ist die Kurbelscheibe 6, die mit der in Figur 1 gezeigten Antriebswelle 8 drehfest verbunden ist und welche die Hubverstelleinheit 11 zur Einstellung der-Hubhöhe h der ebenfalls in Figur 1 gezeigten Kurbelstange 5 vorderseitig trägt. Zur radialen Verlagerung des die Kurbelstange 5 anlenkenden Hubzapfens 7 ist dieser an einem Schlitten 17 der Hubverstelleinheit 11 fixiert, welcher mit einer Zahnstange 18 verbunden ist. In diese Zahnstange 18 greift ein mit der Verstellwelle 12 verbundenes Zahnrad 19 ein, so dass eine relative Drehung des Zahnrades 19 gegenüber der Kurbelscheibe 6 zu einer radialen Verlagerung des Schlittens 17 und damit zu einer Veränderung der Hubhöhe h führt, die auch während der Rotation der Kurbelscheibe 6 erfolgen kann. Demgegenüber gestattet eine synchrone Rotation der Antriebswelle 8 und der Verstellwelle 12 eine konstante Hubhöhe h.

## Patentansprüche

1. Vorrichtung (1) zum Aufbringen eines Wickeldrahtes auf ein zu bewickelndes Bauteil (2), insbesondere auf einen Anker eines Elektromotors, mit einer den Wickeldraht führenden Wickelnadel (3), welche relative zu dem zu bewickelnden Bauteil (2) mittels einer Kurbelstange (5) reversierend antreibbar ist, die mit einer durch einen Antrieb (9) rotationsbeweglichen Antriebswelle (8) verbunden ist, wobei die Hubhöhe (h) mittels einer eine drehbewegliche Verstellwelle (12) aufweisenden Hubverstelleinheit (11) einstellbar ist, wobei die Verstellwelle (12) gegenüber der Antriebswelle (8) relativ drehbeweglich ist, **dadurch gekennzeichnet, dass** die Verstellwelle (12) zur Einstellung der Hubhöhe mittels einer Drehwinkeldifferenz gegenüber der Antriebswelle (8) koaxial zu dieser angeordnet ist.

2. Vorrichtung (1) nach Anspruch 1, **dadurch gekennzeichnet, dass** die Antriebswelle (8) als eine Hohlwelle ausgeführt ist und die Verstellwelle (12) in ihrem Inneren aufnimmt.

3. Vorrichtung (1) nach den Ansprüchen 1 oder 2, **dadurch gekennzeichnet, dass** die Vorrichtung (1) eine Kupplung (14) zur drehfesten Verbindung der Antriebswelle (8) mit der Verstellwelle (12) aufweist.

4. Vorrichtung (1) nach Anspruch 3, **dadurch gekennzeichnet, dass** die Kupplung (14) elektrisch betätigbar ist.

5. Vorrichtung (1) nach zumindest einem der vorhergehenden Ansprüche, **dadurch gekennzeichnet, dass** die Verstellwelle (12) mittels eines Antriebes (13) beweglich ist.

6. Vorrichtung (1) nach zumindest einem der vorhergehenden Ansprüche, **dadurch gekennzeichnet, dass** mittels eines jeweiligen Antriebes (9, 13) einerseits die Antriebswelle (8) und die Verstellwelle (12) zumindest im Wesentlichen drehzahlsynchron und andererseits zur Einleitung der Hubhöhenverstellung mit einer kurzzeitigen Drehzahldifferenz antreibbar sind.

7. Vorrichtung (1) nach zumindest einem der vorhergehenden Ansprüche, **dadurch gekennzeichnet, dass** die Antriebswelle und die Verstellwelle mittels desselben Antriebes antreibbar und durch ein zumindest zwei Schaltstufenden ausweisendes Getriebe wahlweise und/oder zugleich antreibbar sind.

8. Vorrichtung (1) nach zumindest einem der vorhergehenden Ansprüche, **dadurch gekennzeichnet, dass** mittels der Hubverstelleinheit (11) ein die Kurbelstange (5) anlenkender Hubzapfen (7), in unterschiedlichen relativen Positionen gegenüber der Mittelachse der Antriebswelle (8) festlegbar ist.

9. Vorrichtung (1) nach zumindest einem der vorhergehenden Ansprüche, **dadurch gekennzeichnet, dass** die Hubverstelleinheit (11) eine mittels eines mit der Verstellwelle (12) verbundenen Zahnrades (19) stufenlos einstellbare Zahnstange (18) aufweist.

10. Vorrichtung (1) nach zumindest einem der vorhergehenden Ansprüche, **dadurch gekennzeichnet, dass** die Vorrichtung (1) ein Hohlwellengetriebe (10) zur Übertragung der Antriebsleistung auf die hohle Antriebswelle (8) aufweist.

## Claims

1. Apparatus (1) for fitting a winding wire to a component (2) to be wound, in particular to an armature of an electric motor, having a winding needle (3) which guides the winding wire and can be driven in a reversing manner by means of a crank rod (5) relative to the component (2) to be wound, which crank rod is connected to a drive shaft (8) which can be rotated by a drive (9), with the travel height (h) being adjustable by means of a travel adjustment unit (11), which has an adjustment shaft (12) which can rotate, in which case the adjustment shaft (12) can rotate relative to the drive shaft (8), **characterized in that** the adjustment shaft (12) is arranged coaxially with respect to the drive shaft (8) in order to adjust the travel height by means of a rotation angle difference with respect to the drive shaft (8), such that the adjustment can be carried out both during the working process and when the apparatus (1) is stationary.

2. Apparatus (1) according to Claim 1, **characterized in that** the drive shaft (8) is in the form of a hollow shaft and holds the adjustment shaft (12) in its interior.

3. Apparatus (1) according to Claim 1 or 2, **characterized in that** the apparatus (1) has a coupling (14) for rotationally fixed connection of the drive shaft (8) to the adjustment shaft (12).

4. Apparatus (1) according to Claim 3, **characterized in that** the coupling (14) can be operated electrically.

5. Apparatus (1) according to at least one of the preceding claims, **characterized in that** the adjustment shaft (12) can be moved by means of a drive (13).

6. Apparatus (1) according to at least one of the preceding claims, **characterized in that** a respective drive (9, 13) can be used to drive on the one hand the drive shaft (8) and the adjustment shaft (12) at least substantially at a synchronous rotation speed, and on the other hand in order to initiate the travel height adjustment, with a brief rotation speed difference.

7. Apparatus (1) according to at least one of the preceding claims, **characterized in that** the drive shaft and the adjustment shaft can be driven by means of the same drive, and can be driven selectively and/or at the same time by means of a gearbox which has at least two gear stops.

8. Apparatus (1) according to at least one of the preceding claims, **characterized in that** a travel pin (7), which articulates the crank rod (5), can be fixed by means of the travel adjustment unit (11) in different relative positions with respect to the centre axis of the drive shaft (8).

9. Apparatus (1) according to at least one of the preceding claims, **characterized in that** the travel adjustment unit (11) has a toothed rod (18) which can be adjusted infinitely variable by means of a gearwheel (19) which is connected to the adjustment shaft (12).

10. Apparatus (1) according to at least one of the preceding claims, **characterized in that** the apparatus (1) has a hollow-shaft gearbox (10) for transmission of the drive power to the hollow drive shaft (8).

## Revendications

1. Dispositif (1) pour placer un fil d'enroulement sur un composant (2) à enrouler, notamment sur un induit d'un moteur électrique, avec une aiguille d'enroulement (3) guidant le fil d'enroulement, ladite aiguille étant entraînée de façon inversée par rapport au composant (2) à enrouler à l'aide d'une tige de manivelle (5), ladite tige étant reliée à un arbre d'entraînement (8) mobile en rotation du fait d'un entraînement (9), la hauteur de levage (h) pouvant être réglée à l'aide d'une unité de réglage de levage (11) comportant un arbre de réglage (12) mobile en rotation, l'arbre de réglage (12) étant mobile en rotation par rapport à l'arbre d'entraînement (8), **caractérisé en ce que** l'arbre de réglage (12) est disposé de façon coaxiale par rapport à l'arbre d'entraînement (8) pour régler la hauteur de levage à l'aide d'une différence d'angle de rotation, de sorte que le réglage peut se produire tant pendant le fonctionnement qu'à l'arrêt du dispositif (1).

2. Dispositif (1) selon la revendication 1, **caractérisé en ce que** l'arbre d'entraînement (8) prend la forme d'un arbre creux et que l'arbre de réglage (12) est logé à l'intérieur de celui-ci.

3. Dispositif (1) selon les revendications 1 ou 2, **caractérisé en ce que** le dispositif (1) comporte un couplage (14) pour relier fixement sans rotation l'arbre d'entraînement (8) à l'arbre de réglage (12).

4. Dispositif (1) selon la revendication 3, **caractérisé en ce que** le couplage (14) peut être actionné de façon électrique.

5. Dispositif (1) selon au moins l'une quelconque des revendications précédentes, **caractérisé en ce que** l'arbre de réglage (12) peut être déplacé à l'aide d'un entraînement (13).

6. Dispositif (1) selon au moins l'une quelconque des revendications précédentes, **caractérisé en ce que** d'une part l'arbre d'entraînement (8) et l'arbre de réglage (12) peuvent être entrainés à l'aide d'un entraînement (9, 13) respectif au moins pour l'essentiel de façon synchrone par rapport à leur régime respectif et peuvent être entraînés d'autre part avec une petite différence de régime pour permettre le réglage de la hauteur de levage.

7. Dispositif (1) selon au moins l'une quelconque des revendications précédentes, **caractérisé en ce que** l'arbre d'entraînement et l'arbre de réglage peuvent être entraînés à l'aide du même entraînement et être entraînés au choix et/ou en même temps par une boîte de vitesses comportant au moins deux extrémités d'étage.

8. Dispositif (1) selon au moins l'une quelconque des revendications précédentes, **caractérisé en ce qu'**un tenon de levage (7) rattachant la tige de manivelle (5) peut être fixé à l'aide de l'unité de réglage de levage (11) dans différentes positions relatives par rapport à l'axe central de l'arbre d'entraînement (8).

9. Dispositif (1) selon au moins l'une quelconque des revendications précédentes, **caractérisé en ce que** l'unité de réglage de levage (11) comporte une tige dentée (18) réglable en continu à l'aide d'une roue dentée (19) reliée à l'arbre de réglage (12).

10. Dispositif (1) selon au moins l'une quelconque des revendications précédentes, **caractérisé en ce que** le dispositif (1) comporte une boîte de vitesses à arbre creux (10) pour transmettre la puissance d'entraînement à l'arbre d'entraînement (8) creux.
